# EUROPÄISCHE PATENTSCHRIFT

(11) **EP 0 475 034 B1**
(45) Veröffentlichungstag und Bekanntmachung des Hinweises auf die Patenterteilung: **18.11.1993**
(21) Anmeldenummer: 91112394.1
(22) Anmeldetag: 24.07.1991
(51) Int. Cl.: B60H 1/00, F16K 1/16

(54) **Klappeneinrichtung, insbesondere in einer Belüftungs- oder Klimaanlage von Kraftfahrzeugen**
Valve device, in particular for the ventilation or air condition in a system of motor vehicles
Dispositif de clapet, en particulier pour système de ventilation ou de conditionnement d'air de véhicules automobiles

(30) Priorität: 14.08.1990 DE 9011803 U
(43) Veröffentlichungstag der Anmeldung: 18.03.1992
(73) Patentinhaber: Behr GmbH & Co., 70469 Stuttgart (DE)
(72) Erfinder: Voigt, Klaus, W-7142 Bietigheim-Bissingen (DE); Rietz, Peter, W-7135 Wiernsheim 3 (DE)
(74) Vertreter: Dreiss, Fuhlendorf, Steimle & Becker, Patentanwälte

(56) Entgegenhaltungen:
- WO-A-89/11980
- DE-U- 8 512 778
- FR-A- 1 572 497
- FR-A- 2 483 559
- FR-A- 2 620 523
- GB-A- 2 072 327
- US-A- 2 342 877
- PATENT ABSTRACTS OF JAPAN, Band 8, Nr. 166 (M-314)(1603), 2. August 1984

## Beschreibung

Die Erfindung betrifft eine Klappeneinrichtung in einer Belüftungs- oder Klimaanlage von Kraftfahrzeugen, bei der innerhalb eines Luftführungskanals in einem Gehäuse eine Klappe angeordnet ist, die zwischen zwei Kanalwänden in beidendig der Klappe gelegenen Lagerstellen um die hierzwischen verlaufende Achse schwenkbeweglich aufgenommen ist, und wobei die Lagerstellen aus klappen- oder kanalwandseitig vorgesehenen zapfenartigen Lagerelementen und diese aufnehmende büchsen- oder buchsenartigen Gegenlagerlementen bestehen, und wobei eine Lagerstelle in Richtung der Achse federelastisch kraftbeaufschlagt ist.

Bei einer bekannten Klappeneinrichtung dieser Art (FR-A-2 483 559, GB-PA 2 072 327A) soll abhängig der Schwenklage der Klappe innerhalb des Luftführungskanals dieser zur Durchströmung freigegeben oder möglichst luftdicht verschlossen werden. Der zumeist aus einem Hartkunststoff bestehende plattenförmige Klappenkörper der Klappe weist beidendig integral ausgebildete zapfenartige Lagerelemente auf, die jeweils in integral mit der Kanalwand ausgebildeten Lagerschalen drehbeweglich aufgenommen sind. Der Klappenkörper ist allseitig mit einer elastomeren Dichtlippe umspritzt, die ein abdichtendes Verschließen des Luftführungskanals sicherstellen soll.
Da insbesondere auch die Gehäusehälften aus Kunststoff hergestellt sind, müssen aufgrund des Materials und der Herstellungstechnik gewisse Toleranzen der Teile zueinander in Kauf genommen werden, wodurch sich gewisse Anpassungsprobleme an den Lagerstellen sowie an den Dichtkanten zwischen Klappe und Kanalwandung ergeben, die zu einer Luftleckströmung innerhalb des Luftführungskanals auch bei geschlossener Klappenstellung führen können. Aufgrund der Toleranzen kommt es aber insbesondere vor, daß die Klappe innerhalb des Luftführungskanals mit mehr oder weniger großem Axialspiel entlang der Schwenkachse aufgenommen ist, was bei zur Durchströmung freigegebenen Schwenklage der Klappe, bereits bei moderaten Luftströmungsgeschwindigkeiten zu flatternden Klappengeräuschen aufgrund der Beweglichkeit der Klappe in den Lagerstellen führen kann. Besagte Klappengeräusche stellen sich auch aufgrund des radialen Lagerspiels in den Lagerstellen bei den normalerweise zylindrisch ausgeführten Lagerelementen ein. In der FR-A-2 483 559 wird deshalb zum Ausgleich des axialen Lagerspiels vorgeschlagen, daß an der nach außen über das zugehörige Gehäuseteil überstehenden und mit einem Anschlußhebel für einen Verstellantrieb versehenen Lagerstelle der Klappe ein Federelement vorgesehen ist, daß sich an einer den Anschlußhebel für den Verstellantrieb verdeckenden Abdeckung abstützt und die Lagerstelle und die Klappe in Richtung der Achse federnd belastet. In nachteiliger Art und Weise ist also vorgesehen, daß das Federelement außerhalb des Luftführungskanals angeordnet ist. Dies bringt eine voluminöse Bauweise der Klappeneinrichtung mit sich, da zusätzlich zu dem für den Luftkanal benötigten Raum noch Platz für das außerhalb des Luftkanals angeordnete Federelement sowie für die Abdeckung benötigt wird. Eine derartige platzraubende Ausführung ist insbesondere bei Kraftfahrzeugen von gravierendem Nachteil, da bei diesen das zur Verfügung stehende Raumangebot beschränkt ist. Außerdem verteuert die zur Abstützung des Federelements erforderliche Abdeckung die Herstellungskosten beträchtlich.

In Vermeidung der geschilderten Nachteile ist es die Aufgabe der vorliegenden Erfindung, eine Klappeneinrichtung der eingangs genannten Art so auszugestalten, daß eine kompakt bauende Klappenlagerung mit Spielausgleich geschaffen wird.

Zur Lösung dieser Aufgabe ist bei einer gattungsgemäßen Klappeneinrichtung erfindungsgemäß vorgesehen, daß an mindestens einer Lagerstelle das Lagerelement und/oder Gegenlagerelement oder ein Teil hiervon bezüglich der Klappe in Axialrichtung federnd ausgebildet ist oder ein in Axialrichtung wirkendes Federelement besitzt, daß das elastisch federnde Lager- und/oder Gegenlagerelement oder der elastisch federnde Teil hiervon oder das in Axialrichtung wirkende Federelement der Lagerstelle im Inneren des Luftführungskanals zwischen den beiden Lagerstellen in der Klappe integriert angeordnet ist, wobei die Lagerelemente und die Gegenlagerelemente der Lagerstellen zusammenwirkende Lager- und Gegenlagerflächen besitzen, die durch die zwischen den Lager- und den Gegenlagerelementen wirkende Federkraft aneinandergedrückt aber zueinander verdrehbar gehalten sind. Durch die erfindungsgemäßen Maßnahmen wird in besonders einfacher Art und Weise eine Klappeneinrichtung geschaffen, die sich durch ihren kompakten Aufbau auszeichnet. Besonders vorteilhaft hierbei ist, daß all die Elemente der Lagerstelle, welche die in axialer Richtung wirkende Federkraft hervorrufen, zwischen den Lagerstellen der Klappe - also im Inneren des Luftkanals angeordnet - und in der Klappe integriert sind. Es ist bei der erfindungsgemäßen Klappeneinrichtung also nicht mehr - wie bisher - erforderlich, zur Erzeugung der in Axialrichtung wirkenden Federkraft ein aus dem Luftkanal hervorstehendes externes Federteil, welches sich an einer zum Luftkanal parallel verlaufenden Abdeckung abstützt, vorzusehen. Die in der Klappe integrierte Anordnung der die Federkraft hervorrufenden Elemente erlaubt es also in besonders einfacher Art und Weise, die Lageeinrichtung kompakt und raumsparend auszubilden.

Außerdem wird durch die erfindungsgemäßen Maßnahmen erreicht, daß nach Zusammenfügen der den Luftführungskanal bildenden Gehäusehälften die Klappe mit leichter Vorspannung zwischen den Lagerstellen eingespannt wird. Da die heutzutage erreichten Herstellungstoleranzen bei den aus Kunststoff gefertigten Teilen der Klappeneinrichtung nicht allzu groß sind, ist bereits eine geringe Federkraft ausreichend, um die Klappe innerhalb der Lagerstellen axial sowie radial spielfrei aber verdrehbar zu halten. Da eine Federung nur entlang der Schwenkachse vorgesehen ist und nicht die ganze Klappe der Federkraft unterworfen ist, wird auch sichergestellt, daß die Klappe innerhalb des Luftführungskanals mit den Dichtlippen an den Kanalwänden anliegend zwischen den Lagerstellen genau positioniert ist und so der Luftleckstrom bei geschlossener Klappenstellung minimiert oder gar ganz unterbunden ist.

In einem bevorzugten Ausführungsbeispiel kann vorteilhafterweise an nur einer Lagerstelle das Lagerelement aber bevorzugt nur das Gegenlagerelement oder ein Teil hiervon federnd ausgebildet sein oder ein Federelement besitzen, wobei mindestens die zusammenwirkenden Lager- und Gegenlagerflächen der nicht federnd ausgebildeten Lagerstellen eine konische Paßfläche bilden; es können aber auch an beiden Lagerstellen die Lager- und Gegenlagerflächen eine konische Paßfläche bilden. Die federnde Ausbildung der an einer der Querkanten der Klappe gelegenen Lagerstellen bewirkt, daß die mit einer Dichtungslippe versehene andere Querkante der Klappe an der Kanalseitenwand anliegt und die Klappe aufgrund der konischen Paßflächen axial genau ausgerichtet zwischen den Lagerstellen im Luftführungskanal aufgenommen wird.

Konstruktiv besonders einfach kann die nicht federnde Lagerstelle von einem klappenseitig integral angeformten Lagerzapfen gebildet werden, der von dem Klappenkörper in axialer Richtung hervorsteht und von einer kanalwandseitigen Lagerbohrung, durch die der Lagerzapfen abdichtend hindurchragt; eine effektive Abdichtung gegen den Luftaustritt kann konstruktiv in besonders einfacher Weise hierbei dadurch bewirkt werden, daß die Gegenlagerfläche eine luftführungskanalseitige konische Ansenkung der Lagerbohrung sein kann, und daß die Lagerfläche an einem im Durchmesser vergrößerten stumpfkegelförmigen Bereich des durch die Lagerbohrung ragenden zylindrischen Zapfenschaft des Lagerzapfens vorgesehen ist. Hierbei sind zweckmäßigerweise die Kegel- bzw. Konusöffnungswinkel gleich ausgebildet.

Eine verbesserte, weil versteifte Führung des Lagerzapfens innerhalb der Lagerbohrung kann durch Vorsehen eines außerhalb des Luftführungskanals mit der Kanalwandung integral ausgebildeten Lagerkragens erreicht werden, der die Bohrung koaxial und absatzfrei umrandet.

Dadurch, daß der Lagerzapfen in vorteilhafter Weise einen durch die Bohrung ragenden und vom Kragen abstehenden Endbereich besitzt, kann die Klappe mit einem Klappenbetätigungselement drehfest verbunden werden. Hierbei kann der Endbereich zwei integral angeformte, radial federnd ausgebildete Befestigungszungen mit Rückhalteelementen und Mitnehmern besitzen, die in einer Aufnahme des Klappenbetätigungselementes einrastend formschlüssig und in gesicherten Eingriff bringbar sind; somit brauchen keine zusätzlichen Befestigungselemente zur Kopplung der Klappe mit einem Antriebselement vorgesehen zu werden.

Eine konstruktiv bevorzugte Ausführungsvariante der federnd ausgebildeten Lagerstelle sieht vor, daß diese von einem klappenseitig integral angeformten Lagerzapfen gebildet sein kann, der von der Klappe in Axialrichtung gering vorsteht und ggf. keglig ausgebildet ist und von einer Lagerschale gebildet sein kann, die ihrerseits durch eine kuhlenartige Ausbuchtung in der Kanalwandung und einem darin formschlüssig aufgenommenen, tellerförmigen, ggf. kegelschalenförmigen Federelement, das darin befestigt ist. Das zwischen der Ausbuchtungswandung (Kanalwand) und dem Lagerzapfen angeordnete Federelement kann ein elastomeres Formteil sein, das eine Federkraft in Axialrichtung der Klappe ausübt, wodurch die Lager- und Gegenlagerfläche der anderen Lagerstelle aneinander drehbar gehalten werden, und in der Lage ist, toleranzbedingte unterschiedliche Zapfenlängen bzw. Lagerschalentiefen zu kompensieren. Vorzugsweise sind die Kegelöffnungswinkel des Lagerzapfens und der Lagerschale gleich.

In einer anderen vorteilhaften Ausführungsvariante der federnden Lagerstelle ist vorgesehen, daß diese einen an der Kanalwand integral angeformten, ggf. keglig zulaufenden Lagerzapfen aufweisen kann, der in eine diesen passend aufnehmende, mit dem Klappenkörper integral ausgebildete Lagerbüchse oder Lagerbuchse eingreift; ferner ist ein Federelement vorgesehen, das innerhalb der Lagerbüchse oder inner- oder außerhalb der Lagerbuchse angeordnet ist und die klappenseitig vorgesehene federnde Gegenlagerfläche für den Zapfen bildet. Das Federelement kann hierbei zwischen der Stirnwand der Büchse und der Lagerzapfenspitze angeordnet sein und ein in der Lagerausnehmung der Büchse an der Stirnwand separat befestigter, zylindrischer Gummipfropfen sein; das Federelement kann aber auch anders geformt sein, bspw. in Form eines gummielastischen Formkörpers, der durch einen Durchbruch in der Büchse sich in deren Inneres erstreckt oder auch in einer Kunststofftellerfeder. Hierdurch können toleranzbedingte unterschiedliche Lagerzapfenlängen oder Lagerausnehmungstiefen der Büchse bei gleichzeitiger Erzeugung einer federnden Lagerung überbrückt werden.

Bei Klappen, deren Klappenkörper eine diesen umrandende Umspritzung aus eleastomerem Material zur Bildung der Dichtungslippen versehen ist und im Bereich der Büchse diese manschettenartig radial umschließt, kann der Formkörper (Federelement) durch einen Verbindungssteg zwischen den Manschettenbereichen gebildet werden, der integraler Bestandteil der Umspritzung ist und durch den nahe der Büchsenstirnwand gelegenen, als diametraler Manteldurchbruch der Büchse ausgebildeter Durchbruch hindurch innerhalb der Büchse verläuft. Hierdurch kann auf ein separates Federelement verzichtet werden, wodurch die Montage- und Herstellungskosten gesenkt werden können.

In einer anderen Ausführungsvariante kann das Federelement ein gummielastischer Formkörper sein, der innerhalb eines in umittelbarer Verlängerung der Lagerbuchse vorgesehenen Klappendurchbruchs, vorzugsweise diesen verschließend, formschlüssig aufgenommen und befestigt ist, und der eine die Lagerbuchse stirnseitig elastisch verschließende Stirnwand bildet. Zur Zentrierung des Lagerzapfens innerhalb der Lagerbuchse kann die Stirnwand des Formkörpers die in Verlängerung der Lagerbuchse konisch ausgebildete Gegenlagerfläche aufweisen, die mit der Lagerfläche der kegligen Spitze des Lagerzapfens zusammenwirkt. Zur Verbesserung der Federkraftwirkung kann der Formkörper einen im Klappendurchbruch angeordneten, dünnwandigen Bereich besitzen, der zieharmonikaartig quer zur Klappenlängsachse (Achse, Schwenkachse) gewellt ausgebildet ist. Auch hier kann in vorteilhafter Weise der Formkörper integraler Bestandteil der elastomeren Umspritzung des Klappenkörpers sein, wodurch die Notwendigkeit eines separat anzubringenden Federelements entfällt.

Eine weitere Variante der federnd ausgebildeten Lagerstelle sieht vor, daß am Klappenkörper eine ggf. integral angeformte Lagerbüchse vorgesehen sein kann, die eine Stirnwand besitzt, die bezüglich dem Klappenkörper in Axialrichtung federnd ausgebildet ist. Eine konstruktiv besonders elegante Lösung sieht hierzu vor, daß der Klappenkörper zwei parallel zueinander, quer zur Drehachse verlaufende Schlitze besitzen kann, zwischen welchen ein die Stirnwand aufweisender, schmaler Federsteg ausgebildet ist; d.h., in der vorliegenden Variante wird die notwendige Lagerfederkraft durch einen intergalen Bestandteil des Klappenkörpers, und nicht durch ein zusätzliches Federelement, erzeugt.

Um auch hier ein radiales Lagerspiel zu vermeiden, ist es vorteilhaft, daß die Stirnwand die mit der kegligen Spitze des Lagerzapfens zusammenwirkende konische Gegenlagerfläche aufweisen kann.

Dadurch, daß die Schlitze bis in die Nähe der Längskanten des Klappenkörpers reichen können und der Klappenkörper beidendig der Schlitze parallel zur Drehachse verlaufende, integral angeformte Versteifungsprofile, vorzugsweise über einen begrenzten Längskantenbereich besitzen kann, ist zum einen sichergestellt, daß eine ausreichende Federwirkung in Klappenlängsrichtung des die Stirnwand tragenden Stegs gegeben ist und zum anderen das für die Torsionssteifigkeit maßgebliche polare Flächenträgheitsmoment aufgrund der Querschnittsreduktion des Klappenkörpers durch die Schlitze durch die Profile kompensiert wird. Die Schlitze können in vorteilhafter Weise hierbei von der den Klappenkörper umrandenden Umspritzung abgedeckt werden, wodurch keinerlei Luftleck innerhalb des Klappenkörpers gegeben ist. Die Federwirkung des Stegs kann weiter dadurch verbessert werden, daß der zweite Schlitz einen unmittelbar an die Stirnwand sich anschließenden erweiterten Bereich besitzen kann, der ggf. von der Umspritzung ausgefüllt ist.

Weitere vorteilhafte Ausbildungen der Erfindung sind in den Unteransprüchen definiert, wobei Einzelheiten der Erfindung der folgenden Beschreibung zu entnehmen sind, in der diese anhand der in der Zeichnung dargestellten Ausführungsbeispiele näher beschrieben und erläutert ist. Es stellen dar:
- Figur 1: eine Ansicht einer in einem Luftführungskanal eines zweiteiligen Gehäuses schwenkbeweglich eingebauten Klappe, gemäß einem ersten Ausführungsbeispiel,
- Figur 2: einen schematischen Schnitt entlang der Linie II-II der in Figur 1 gezeigten Klappeneinrichtung mit einer linksseitigen nicht federnden und einer rechtsseitigen federnden Lagerstelle,
- Figur 2a: einen schematischen Schnitt entlang der Linie IIa-IIa der in Figur 1 gezeigten Klappeneinrichtung,
- Figur 3: eine Ansicht des Klappenkörpers der in Figur 1 gezeigten Klappe,
- Figur 4: eine Teilansicht der rechten Hälfte eines Klappenkörpers gemäß einer zweiten Ausführungsvariante,
- Figur 5: einen entsprechend Figur 2 vorgenommenen Schnitt durch die federnd ausgebildete Lagerstelle einer mit einem Klappenkörper gemäß Figur 4 versehenen Klappeneinrichtung,
- Figur 6: eine Teilansicht der rechten Hälfte eines Klappenkörpers gemäß einer dritten Ausführungsvariante,
- Figur 7: einen entsprechend Figur 2 vorgenommenen Schnitt durch die federnd ausgebildete Lagerstelle einer mit einem Klappenkörper gemäß Figur 6 versehenen Klappeneinrichtung,
- Figur 8: einen entsprechend Figur 2 vorgenommenen Schnitt durch die federnd ausgebildete Lagerstelle einer vierten Variante der Klappeneinrichtung.

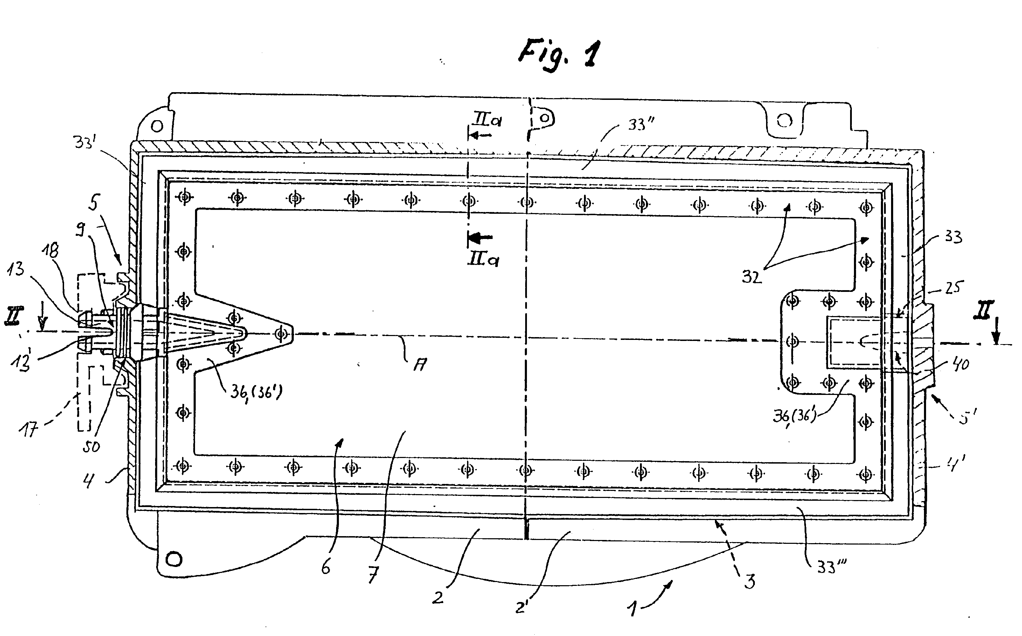

In Figur 1 ist ein Bereich eines Lüftungskanalgehäuses 1 einer Klima- oder Belüftungsanlage eines Kraftfahrzeugs gezeigt, das aus einer linken und einer rechten Gehäusehälfte 2,2' zusammengesetzt einen Lüftungskanal 3 bildet. Wie dort gezeigt, ist zwischen einer linken und einer rechten Kanalwand 4,4' in Lagerstellen 5,5' eine Klappe 6 um die Achse A schwenkbeweglich aufgenommen, so daß abhängig der Schwenklage der Klappe 6 innerhalb des Luftführungskanals 3 dieser zur Durchströmung freigegeben oder verschlossen ist.

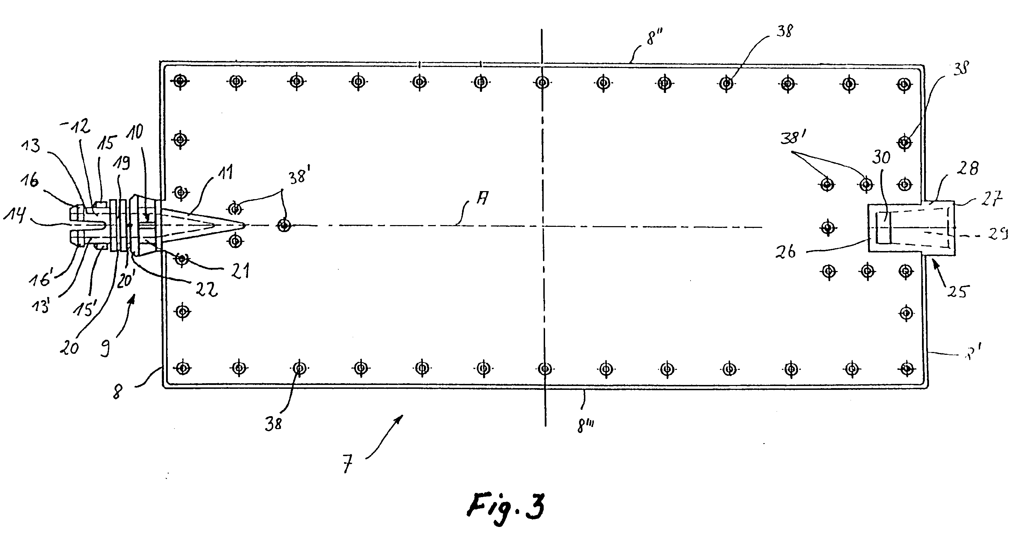

Die Klappe 6 besteht aus einem Klappenkörper 7, der in Figur 3 näher dargestellt ist, und in ähnlicher Weise wie die Gehäusehälften 2,2' des Lüftungskanalgehäuses 1 aus einem harten, abriebfesten Kunststoff hergestellt ist. Im vorliegenden Ausführungsbeispiel weist der plane Klappenkörper 7 eine rechteckige Außenkontur auf, und besitzt einen von der linken Querkante 8 abstehenden, integral angeformten Lagerzapfen 9, welcher rotationssymmetrisch um die Klappenlängsachse A ausgebildet ist. Der Lagerzapfen 9 weist einen hohlzylindrischen Zapfenschaft 10 auf, der mit einem hinteren konischen Zapfenbereich 11 in dem Klappenkörper 7 ausläuft. Der vordere Zapfenbereich 12 besitzt zwei Befestigungszungen 13,13', die durch einen diametral durch den Zapfenschaft 10 verlaufenden Axialschlitz 14 mit dem Lagerzapfen 9 integral ausgebildet sind. Die federnd ausgebildeten Befestigungszungen 13,13' weisen umfangsseitig als Mitnehmer 15,15' dienende integral angeformte Formkörper, sowie am vorderen, im Durchmesser vergrößerten Endbereich, als Rückhaltelemente 16,16' dienende Rückhalteschultern auf. Hierdurch kann der Lagerzapfen 9 - wie dies anhand Figur 1 zu sehen ist - mit einem Betätigungselement 17 zum Verschwenken der Klappe 6 ohne zusätzliche Befestigungselemente einrastend gekoppelt werden. Die Rückhalteelemente 16,16' und die Mitnehmer 15,15' wirken hierbei mit einer entsprechend abgestuften und Mitnahmenuten aufweisende hohlzylindrische Aufnahme 18 des Betätigungselementes 17 zusammen, um eine gesicherte Drehmomentübertragung zu bewirken. Der Zapfenschaft 10 weist ferner einen mittleren Zapfenbereich 19 auf, der zwei in axialem Abstand zueinander verlaufende Umfangsnuten 20,20' besitzt und an den sich ein im Durchmesser vergrößerter Zapfenbereich 21 anschließt, der eine vom Klappenkörper weg weisende, umfangsseitig verlaufende, keglige Lagerfläche 22 aufweist.

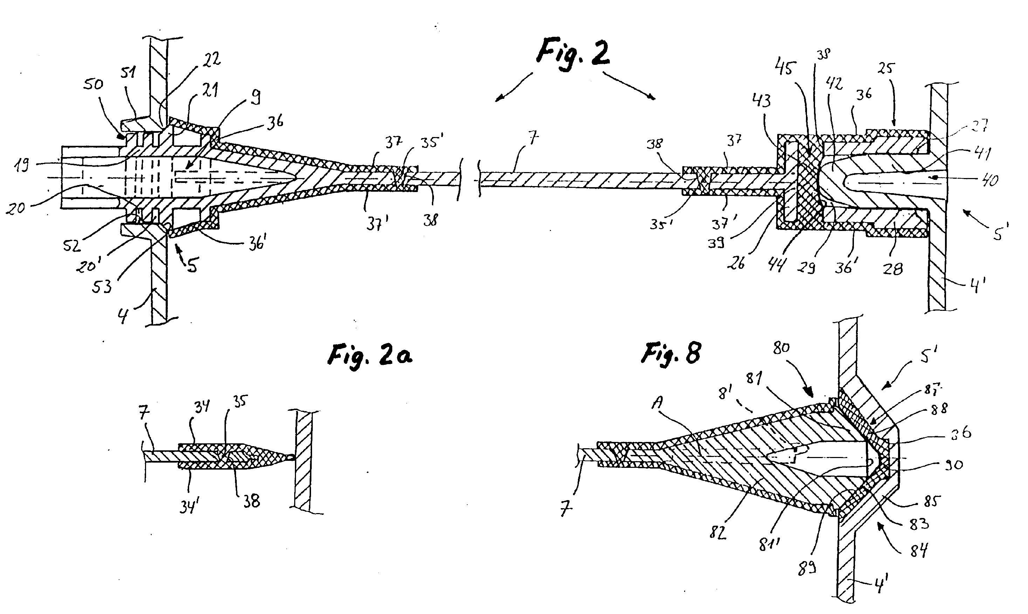

An der dem Lagerzapfen 9 gegenüberliegenden rechten Querkante 8' besitzt der Klappenkörper 7 eine koaxial zur Achse A und rotationssymmetrisch um diese ausgebildete, integral angeformte, hohlzylindrische Lagerbüchse 25, deren Stirnwand 26 mit Abstand von der Querkante 8' im Klappenkörper 7 angeordnet ist. Die gegenüberliegende Stirnseite 27 des Mantels 28, in der die zylindrische Lagerausnehmung 29 mündet, ragt von der Querkante 8' hervor. Die Lagerbüchse 25 wird, wie auch in Figur 2 zu sehen ist, von einem nahe der Stirnwand 26 angeordneten Manteldurchbruch 30 diametral durchdrungen.

Der Klappenkörper 7 ist mit einer aus einem elastomeren Gummimaterial bestehenden Umspritzung 32 umfangsseitig versehen (Figur 1), welche entlang den Querkanten 8,8' und den Längskanten 8'',8''' eine umrandende Dichtungslippe 33,33',33'',33''' bildet, die, wie in Figur 2a gezeigt ist, mit einem oberen und unteren Lappen 34,34' den Kantenbereich des Klappenkörpers 7 gabelartig umschließt; die Lappen 34,34' liegen hierbei an den zwei Klappenoberflächen an und werden mittels integral von der Umspritzung 32 gebildeten Verbindungsformkörper 35, die durch eine Anzahl im Kantenbereich angeordneter konischer Bohrungen 38 (Figur 3) durch den Formkörper 7 hindurch verlaufen, an diesem gehalten. Sowohl der Lagerzapfen 9 als auch die Lagerbüchse 25 werden von beidflächig des Klappenkörpers 8 angeordneten, manschettenartigen Bereichen 36,36' der Umspritzung 32 umschlossen, die jeweils über 180° Umfangswinkel um die Lagerelemente 9,25 verlaufen. Auch hier sind die auslaufenden Lappen 37,37' der an gegenüberliegenden Oberflächen des Klappenkörpers 7 angeordneten Bereiche 36,36', mittels innerhalb von Bohrungen 38' verlaufende Verbindungsformkörper 35' bereichsweise verbunden, die um die Lagerelemente 9,25 angeordnet sind (Figur 3). Wie in Figur 2 zu sehen ist, schließen die manschettenartigen Bereiche 36,36' bündig mit der Stirnseite 27 der Lagerbüchse 25 bzw. mit dem die Lagerfläche 22 aufweisenden Zapfenbereich 21 ab oder stehen ringartig gering von diesen hervor, so daß die Klappe 6 auch an den Lagerstellen 5,5' spaltlos innerhalb des Luftführungskanals 3 zwischen den Kanalwänden 4,4' aufgenommen ist.

Wie in Figur 1, aber insbesondere in Figur 2 zu sehen ist, weist die rechte Lagerstelle 5' einen integral mit der Kanalwand 4' ausgebildeten Lagerzapfen 40 auf, der in den Luftführungskanal 3 hineinragt und mit seinem zylindrischen Schaft 41 innerhalb der Lagerausnehmung 29 der Lagerbüchse 25 passend aufgenommen ist. Zwischen Zapfenspitze 42 und Stirnwand 26 der Lagerbüchse 25 ist, wie später präzisiert werden soll, ein Federelement 45 angeordnet, welches eine elastische Gegenlagerfläche 44 bildet, an die die gerundet oder leicht kegelförmig ausgebildete Lagerfläche 43 der Zapfenspitze 42 kraftschlüssig anliegt. Das Federelement 45 kann ein separater zylindrischer Pfropfen aus einem elastomeren Material sein, welcher in die Lagerausnehmung 29 an der Stirnwand 26 befestigt wird, oder, wie in Figur 2 gezeigt ist, durch ein elastomeres Formteil, insbesondere einem Verbindungssteg 39 gebildet werden, der integral mit der Umspritzung 32 ausgebildet ist, und durch den diametral durch den Mantel 27 der Lagerbüchse 25 verlaufenden Manteldurchbruch 30 hindurch in der Lagerausnehmung 29 verläuft. Die vom Federelement 45 einzunehmende Axiallänge in der Lagerausnehmung 29 wird so festgelegt, daß bei Aufnahme der Klappe 6 zwischen den Lagerstellen 5,5' und Kontakt der Lagerfläche 43 des Lagerzapfens 40 und der Gegenlagerfläche 44 des elastomeren Federelements 45 ein ausreichender Federweg zwischen diesen gegeben ist, um eine Federkraftwirkung entlang der Schwenkachse A der Klappe 6 in Richtung auf die linke Lagerstelle 5 auszuüben.

Wie in Fig.1 angedeutet und in Fig.2 zu sehen ist, wird kanalseitig die linke Lagerstelle 5 von einer durch die Kanalwand 4 verlaufenden Lagerbohrung 50 gebildet, um die herum außerhalb des Luftführungskanals 3 ein integral an der Kanalwand 4 angeformter Lagerkragen 51 verläuft, in dem der mittlere Zapfenbereich 19 mit den Umfangsnuten 20,20' passend aufgenommen wird, wobei zwischen Bohrungswand 52 und Umfangsnuten 20,20' eine Art Spaltdichtung ausgebildet wird. Die keglige Lagerfläche 22 des Zapfenbereichs 21 liegt an einer mit gleichem Öffnungswinkel vorgesehenen konischen Gegenlagerfläche 53 an, die durch eine kanalwandseitige Ansenkung der Lagerbohrung 50 gebildet wird. Aufgrund der durch das Federelement 45 ausgeübten Federkraft werden die Lagerfläche 22 und die Gegenlagerfläche 53 aneinandergepreßt aber verdrehbar zueinander gehalten, so daß die Lagerstelle 5 abgedichtet ist und jegliches Axialspiel der Klappe 6 zwischen den Lagerstellen 5,5' als auch radiales Lagerspiel innerhalb der Lagerstellen 5,5' unterbunden wird. Hierdurch ist die Klappe 6 zwischen der nicht federnd ausgebildeten linken Lagerstelle 5 und der federnd ausgebildeten rechten Lagerstelle 5' im Luftführungskanal 3 des Luftführungskanalgehäuses 1 spielfrei "eingespannt".

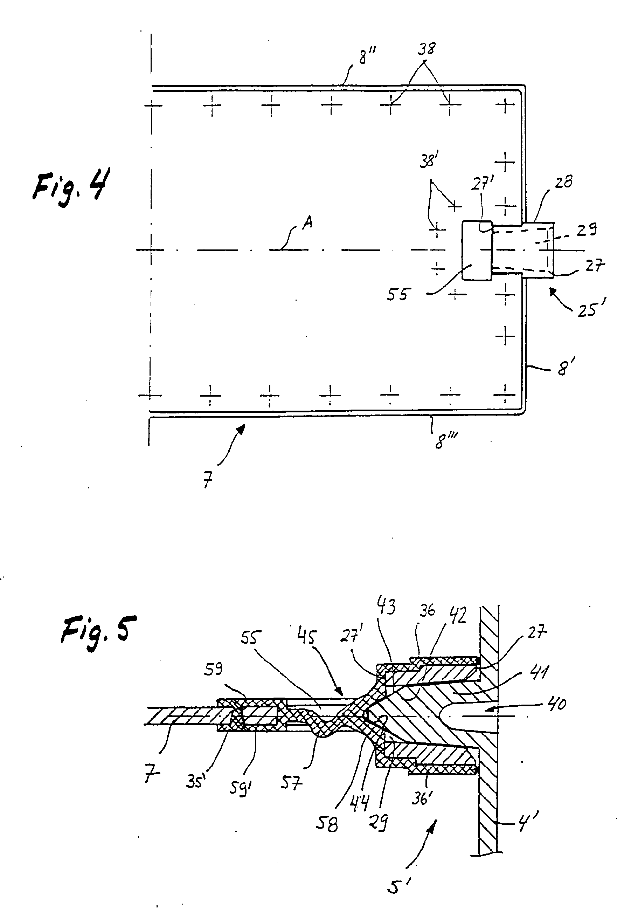

Eine andere Ausführungsvariante der federnden Lagerstelle 5' ist in Figur 5 gezeigt, wobei für gleiche oder funktionsgleiche Teile mit dem zuvor beschriebenen Ausführungsbeispiel gleiche Bezugsziffern gewählt sind. Das kanalwandseitige Lagerelement wird hier wiederum von einem Lagerzapfen 40 gebildet, dessen leicht kegliger oder zylindrischer Schaft 41 innerhalb der zylindrisch abgestuften oder leicht konisch zulaufenden Lagerausnehmung 29 einer integral mit dem Klappenkörper 7 um die Drehachse A rotationssymmetrisch angeformten Lagerbuchse 25' passend aufgenommen liegt. Wie in Figur 4 zu sehen ist, weist der Klappenkörper 7 in Axialverlängerung zur Lagerbuchse 25' einen Durchbruch 55 mit rechteckigem Querschnitt auf, in der die rückwärtige Sitrnseite 27' des Lagerbuchsenmantels 28 endet, die der von der Querkante 8' axial vorstehenden Stirnseite 27 gegenüberliegt. Wie weiter in Figur 5 zu sehen ist, ist innerhalb des Durchbruchs 55 ein quer zur Drehachse A gewellt oder zieharmonikaartig ausgebildeter Bereich 57 eines elastomeren Formteils angeordnet, welches das Federelement 45 der Lagerstelle 5' bildet. Das Formteil ist integral mit der Umspritzung 32 der Klappe 6 ausgebildet, wobei zwischen gewelltem Bereich 57 und den den Büchsenmantel 28 jeweils halb umfangsseitig umschließenden manschettenartigen Bereichen 36,36' ein die Lagerausnehmung 29 elastisch stirnseitig 27' verschließender Stirnwandbereich 58 ausgebildet ist, der die federnde, ggf. konische, Gegenlagerfläche 44 des Federelements 45 für die Lagerfläche 43 des Lagerzapfens 40 bildet; die Lagerfläche 43 ist an der flachkegligen Zapfenspitze 42 vorgesehen. Der gewellte Bereich 57 des Formteils endet, ähnlich wie zuvor bei der Dichtungslippe 33 beschrieben, in gabelartigen Lappen 59,59', welche jeweils an einer der Oberflächen des Klappenkörpers 7 anliegen und den Durchbruch 55 verschließen und mittels Verbindungsformteilen 35' miteinander verbunden sind, die durch konische Bohrungen 38' hindurch verlaufen, die um den Durchbruch 55 angeordnet, im Klappenkörper 7 vorgesehen sind. Durch die elastische Deformation des Stirnwandbereichs 58 und des anschließenden gewellten Bereichs 55 des elastischen Formteils (Federelement 45) bei passender Aufnahme des Lagerzapfens 40 in der Lagerbuchse 25', wird die zum spielfreien "Einspannen" der Klappe 6 zwischen den Gehäusehälften 2,2' erforderliche Federkraft erzeugt.

In Figur 7 ist ein weiteres Ausführungsbeipiel der federnden rechten Lagerstelle 5' der Klappeneinrichtung gezeigt. Für gleiche oder funktionsgleiche Bauelemente mit den zuvor beschriebenen Ausführungsbeispielen, werden auch hier gleiche Bezugsziffern verwendet.
Das gehäuseseitige Lagerelement der Lagerstelle 5' wird wiederum von einem in den Luftführungskanal 3 ragenden Lagerzapfen 40 gebildet, der integral mit der Kanalwand 4 ausgebildet ist. Der Zapfenschaft 41 besitzt einen zylindrischen Bereich 41', an den sich ein leicht keglig zulaufender Bereich 41'' anschließt, an den sich ein mit größerem Öffnungswinkel keglig zulaufender Bereich bis zur vorzugsweise gerundeten Zapfenspitze 42 anschließt und die Lagerfläche 43 der Lagerstelle 5' bildet.

Die als Gegenlagerelement integral mit dem Klappenkörper 7 (Figur 8) vorgesehene, um die Drehachse A rotationssysmmetrisch ausgebildete Lagerbüchse 25'' steht, wie zuvor beschrieben, mit der die Lagerausnehmungsöffnung aufweisenden Stirnseite 27 von der Querkante 8' vor. Der Lagerzapfen 40 ist auch im vorliegenden Ausführungsbeispiel weitestgehend radial spielfrei in der Lagerausnehmung 29 aufgenommen. Anders jedoch wie im ersten Ausführungsbeispiel gemäß den Figuren 2 und 3, ist die Stirnwand 26'' der Lagerbüchse 25'' in Form eines Konus ausgebildet, wobei die Innenfläche der Stirnwand 26'' die mit gleichem Öffnungswinkel wie die Lagerfläche 43 versehenen Gegenlagerfläche 44 des Lagerzapfens 40 bildet.

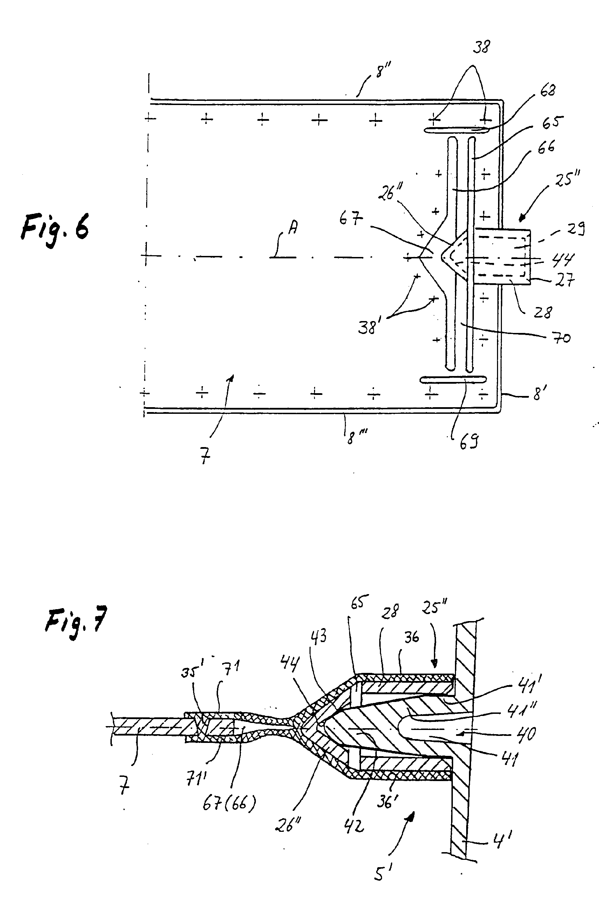

Zur Ausbildung eines gegenüber dem gehäuseseitigen Lagerelement (Lagerzapfen 40) federnd ausgebildeten klappenseitigen Gegenlagerelements (Lagerbüchse 25'') weist der Klappenkörper 7, wie in Figur 6 gezeigt ist, zwei parallel zur Querkante 8' verlaufende Schlitze 65,66 auf, die sich zwischen zwei hierzu orthogonal über einen Teillängenbereich des Klappenkörpers 7 mit Abstand zu den Längskanten 8'' bzw. 8''' verlaufende Versteifungsprofile 68,69 erstrecken, die mit dem Klappenkörper 7 integral ausgebildet sind und zur Erhöhung der Torsionssteifigkeit des durch die Schlitze 65,66 in axiale Richtung teilweise querschnittsunterbrochenen Klappenkörpers 7 dienen. Der zweite Schlitz 66 besitzt einen symmetrisch zur Drehachse A erweiterten Bereich 67 mit dreieckiger Kontur, dessen Abmessung quer zur Achse A gegringfügig größer als der Durchmesser der Lagerbüchse 25'' ist, und der sich in unmittelbarer Verlängerung an die Stirnwand 26'' anschließt. Der erste Schlitz 65 verläuft demgegenüber durch den Mantel 28 der Lagerbüchse 25'' und trennt somit die Stirnwand 26'' von diesem.
Hierdurch ist zwischen den Schlitzen 65,66 ein Federsteg 70 ausgebildet, welcher integral beidendig im Bereich der Versteifungsprofile 68,69 mit dem Klappenkörper 7 verbunden ist und der die Stirnwand 26'' mit der Gegenlagerfläche 44 für den Lagerzapfen 40 trägt.

Die Ausbildung des Federstegs 70 ermöglicht eine federnde Axialverschiebung der Stirnwand 26'' bezüglich dem Klappenkörper 7 und der Lagerbüchse 25'', wodurch bei Aufnahme des Lagerzapfens 40 in der Lagerausnehmung 29 und Anlage der entsprechenden Lager- und Gegenlagerflächen 43 bzw. 44, sowohl eine radial- als auch "vorgespannte" axialspielfreie Lagerung der Klappe 6 im Luftführungskanal 3 zwischen den Lagerstellen 5,5' gegeben ist.

Die Schlitze 65,66 werden von Lappen 71,71' der manschettenartigen Bereiche 36,36' der elastomeren Umspritzung 32 gegen Luftdurchtritt abgedeckt. Hierbei sind die beidseitig des Klappenkörpers 7 anliegenden Lappen 71,71' ähnlich wie zuvor beschrieben, miteinander verbunden, und so formschlüssig am Klappenkörper 7 gehalten.

Ein weiteres Ausführungsbeispiel einer federnd ausgebildeten Lagerstelle 5' ist in Figur 8 gezeigt. Dort ist als klappenseitiges Lagerelement ein rotationssymmetrisch um die Dreh- oder Schwenkachse A an dem Klappenkörper 7 integral angeformter Lagerzapfen 80 vorgesehen, der einen kegelstumpfförmigen vorderen Zapfenbereich 81 besitzt und mit der Stirnseite 81' von der Querkante 8' axial vorsteht. An den vorderen Zapfenbereich 81 schließt sich ggf. unter Bildung einer Stufe klappenseitig ein in den ebenen Klappenkörper 7 übergehender, ebenfalls kegelförmig zulaufender hinterer Zapfenbereich 82 an.

Als gegenüber dem klappenseitigen Lagerelment (Lagerzapfen 80) federnd ausgebildetes gehäuseseitiges Gegenlagerelement ist eine einseitig offene Lagerschale 84 vorgesehen, die durch eine in der Kanalwand 4' rotationssymmetrisch um die Drehachse A ausgebildete, kuhlenartig vom Luftführungskanal 3 weg weisende Ausbuchtung 85 und einem darin formschlüssig aufgenommenen, ggf. befestigten, teller- oder kegelschalenförmig ausgebildeten Federelement 87 gebildet wird. In Figur 8 wird das Federelement 87 von einem elastomeren Formteil gebildet, dessen zum Luftführungskanal 3 gelegene konusförmige Oberfläche konturgleich zum vorderen, kegelstumpfförmigen Lagerzapfenbereich 81 ausgebildet ist, und die in Axialrichtung federnd ausgebildete Gegenlagerfläche 89 für die zapfenseitige Lagerfläche 83 bildet. Die Ausbuchtung 85 besitzt ferner eine topfförmige zylindrische Aufnahme 86, in der ein entsprechend ausgebildeter Befestigungsfortsatz 90 des Formteils formschlüssig aufgenommen und verklebt ist. Es versteht sich von selbst, daß die Gegenlagerfläche 89 des elastomeren Formteils zur Erzielung einer möglichst reibungsarmen Lagerung des Lagerzapfens 80 entsprechend verdichtet oder oberflächenbeschichtet sein kann.

## Patentansprüche

1. Klappeneinrichtung in einer Belüftungs- oder Klimaanlage von Kraftfahrzeugen, bei der innerhalb eines Luftführungskanals (3) in einem Gehäuse (1) eine Klappe (6) angeordnet ist, die zwischen zwei Kanalwänden (4,4') in beidendig der Klappe (6) gelegenen Lagerstellen (5,5') um die hierzwischen verlaufende Achse (A) schwenkbeweglich aufgenommen ist, und wobei die Lagerstellen (5,5') aus wandseitig vorgesehenen zapfenartigen Lagerelementen (9;40;80) und diese aufnehmende büchsen- oder buchsenartigen Gegenlagerelementen (50;25;25',25'';84) bestehen, und wobei eine Lagerstelle (5,5') in Richtung der Achse (A) federelastisch kraftbeaufschlagt ist, **dadurch gekennzeichnet,** daß an mindestens einer Lagerstelle (5,5') das Lagerelement (9,40,80) und/oder Gegenlagerelement (50;25,25',25'';84) oder ein Teil hiervon bezüglich der Klappe (6) in Axialrichtung federnd ausgebildet ist oder ein in Axialrichtung wirkendes Federelement (45;87) besitzt, daß das elastisch federnde Lager- (9,40,80) und/oder Gegenlagerelement (50;25,25';84) oder der elastisch federnde Teil hiervon oder das in Axialrichtung wirkende Federelement (45;87) der Lagerstelle (5,5') im Inneren des Luftführungskanals (3) zwischen den beiden Lagerstellen (5,5') in der Klappe (6) integriert angeordnet ist, wobei die Lagerelemente (9;40;80) und die Gegenlagerelemente (50;25,25',25'';84) der Lagerstellen (5,5') zusammenwirkende Lager- und Gegenlagerflächen (22,53;43,44;83,89) besitzen, die durch die zwischen den Lager- (9;40;80) und den Gegenlagerelementen (50;25,25',25'';84) wirkende Federkraft aneinandergedrückt aber zueinander verdrehbar gehalten sind.

2. Klappeneinrichtung nach Anspruch 1, dadurch gekennzeichnet, daß nur an einer Lagerstelle (5') das Lager- oder das Gegenlagerelement (40,80;25,84) oder ein Teil hiervon federnd ausgebildet ist oder ein Federelement (45;87) besitzt, wobei mindestens die zusammenwirkenden Lager- und Gegenlagerflächen (22,53) der nicht federnd ausgebildeten Lagerstelle (5) eine konische Paßfläche bilden.

3. Klappeneinrichtung nach Anspruch 1 oder 2, dadurch gekennzeichnet, daß an beiden Lagerstellen (5,5') die Lager- und Gegenlagerflächen (22,53;43,44;83,89) eine konische Paßfläche bilden.

4. Klappeneinrichtung nach einem der Ansprüche 1 bis 3, dadurch gekennzeichnet, daß die nicht federnde Lagerstelle (5) von einem an einem Klappenkörper (7) der Klappe (6) integral angeformten Lagerzapfen (9) und einer kanalwandseitigen Lagerbohrung (50) gebildet wird, wobei der Lagerzapfen (9) von der Klappe (6) in Axialrichtung hervorsteht und durch die Lagerbohrung (50) abdichtend hindurchragt.

5. Klappeneinrichtung nach Anspruch 4, dadurch gekennzeichnet, daß die Gegenlagerfläche (53) durch eine luftführungskanalseitige konische Ansenkung der Lagerbohrung (50) gebildet ist, und die Lagerfläche (22) an einem im Durchmesser vergrößerten, stumpfkegelförmigen Bereich (21) des durch die Lagerbohrung (50) ragenden Lagerzapfens (9) vorgesehen ist.

6. Klappeneinrichtung nach einem der Ansprüche 4 oder 5, dadurch gekennzeichnet, daß die Lagerbohrung (50) von einem außerhalb des Luftführungskanals (3) mit der Kanalwand (4) integral ausgebildeten Lagerkragen (51) umrandet wird.

7. Klappeneinrichtung nach einem der Ansprüche 4 bis 6, dadurch gekennzeichnet, daß ein durch die Lagerbohrung (50) hindurch ragender Endbereich (12) des Lagerzapfens (9) mit einem Klappenbetätigungselement (17) drehfest koppelbar ist.

8. Klappeneinrichtung nach Anspruch 7, dadurch gekennzeichnet, daß der Endbereich (12) des Lagerzapfens (9) zwei integral angeformte, radial federnd ausgebildete Befestigungszungen (13,13') mit Rückhalteelementen (17,17') und Mitnehmer (16,16') aufweist, die in einer Aufnahme (18) des Klappenbetätigungselements (17) einrastbar und darin formschlüssig in gesichertem Eingriff aufnehmbar sind.

9. Klappeneinrichtung nach einem der Ansprüche 1 bis 8, dadurch gekennzeichnet, daß die federnde Lagerstelle (5') von einem an dem Klappenkörper (7) der Klappe (6) angeformten Lagerzapfen (80) gebildet wird, der von der Klappe (6) in Axialrichtung gering hervorsteht und ggf. keglig zulaufend ausgebildet ist, und von einer Lagerschale (84) gebildet wird, bestehend aus einer kuhlenartigen Ausbuchtung (85) in der Kanalwand (4') und einem darin formschlüssig und gesichert aufgenommenen tellerförmigen, ggf. kegelschalenförmigen Federelement (87).

10. Klappeneinrichtung nach Anspruch 9, dadurch gekennzeichnet, daß das Federelement (87) ein elastomeres kegeltellerförmiges Formteil ist, das der Innenkontur der Ausbuchtung (85) und der Lagerfläche (83) des Lagerzapfens (80) entsprechend ausgebildet ist und die Gegenlagerfläche (89) aufweist.

11. Klappeneinrichtung nach Anspruch 10, dadurch gekennzeichnet, daß die Gegenlagerfläche (89) am Formteil eine reibungsmindernde Oberflächenbeschichtung aufweist.

12. Klappeneinrichtung nach einem der Ansprüche 1 bis 8, dadurch gekennzeichnet, daß die federnde Lagerstelle (5') von einem integral an der Kanalwand (4) angeformten, ggf. keglig zulaufenden Lagerzapfen (40), von einer an dem Klappenkörper (7) der Klappe (6) ggf. integral angeformten Lagerbüchse (25) oder Lagerbuchse (25'), in die der Lagerzapfen (40) passend aufgenommen ist, und von einem Federelement (45) gebildet wird, das inner- oder außerhalb der Lagerbüchse (25) bzw. Lagerbuchse (25') angeordnet ist und die federnde Gegenlagerfläche (44) für den Lagerzapfen (40) bildet.

13. Klappeneinrichtung nach Anspruch 12, dadurch gekennzeichnet, daß das Federelement (45) zwischen einer Stirnwand (26) der Büchse (25) und der Lagerzapfenspitze (42) angeordnet ist.

14. Klappenanordnung nach einem der Ansprüche 12 oder 13, dadurch gekennzeichnet, daß das Federelement ein innerhalb der Büchse an der Stirnwand befestigter zylindrischer Gummipropfen ist.

15. Klappeneinrichtung nach einem der Ansprüche 12 oder 13, dadurch gekennzeichnet, daß das Federelement (45) ein gummielastischer Formkörper ist, der durch einen Durchbruch (30) in der Büchse (25) sich in das Innere dieser erstreckt.

16. Klappeneinrichtung nach Anspruch 12, dadurch gekennzeichnet, daß das Federelement (45) ein gummielastischer Formkörper ist, der innerhalb eines in unmittelbare Verlängerung der Lagerbuchse (25') vorgesehenen Klappendurchbruchs (55) formschlüssig aufgenommen und befestigt ist, und der eine die Lagerbuchse (25') stirnseitig elastisch verschließende Stirnwand (58) bildet.

17. Klappeneinrichtung nach Anspruch 16, dadurch gekennzeichnet, daß die Stirnwand (58) des Formkörpers die in Verlängerung der Lagerbuchse (25') konisch ausgebildete Gegenlagerfläche (44) aufweist, die mit der Lagerfläche (43) der kegligen Spitze des Lagerzapfens (40) zusammenwirkt.

18. Klappeneinrichtung nach Anspruch 16 oder 17, dadurch gekennzeichne, daß der Formkörper einen im Klappendurchbruch (55) angeordneten, dünnwandigen Bereich (57) besitzt, der zieharmonikaartig quer zur Achse (A) gewellt ausgebildet ist.

19. Klappeneinrichtung nach einem der Ansprüche 15 bis 18, dadurch gekennzeichnet, daß das Federelement (45) integraler Bestandteil einer den Klappenkörper (7) umrandenden, Dichtungslippen (33) bildenden Umspritzung (55) aus elastomerem Material ist, die beidseitig des Klappenkörpers (7) die Lagerbüchse (25) bzw. -buchse (25') manschettenartig umschließende Bereiche (36,36') besitzt.

20. Klappeneinrichtung nach Anspruch 15 und 19, dadurch gekennzeichnet, daß der Durchbruch (30) in der Büchse (25) diametral durch den Büchsenmantel (27) nahe der Stirnwand (25) verläuft und der Formkörper durch einen innerhalb der Büchse (25) verlaufenden Verbindungssteg (39) zwischen den beiden manschettenartigen Bereichen (36,36') gebildet wird.

21. Klappeneinrichtung nach einem der Ansprüche 1 bis 8, dadurch gekennzeichne, daß die federnde Lagerstelle (5') von einem integral an der Kanalwand (4) angeformten, ggf. keglig zulaufenden Lagerzapfen (40) gebildet wird und von einer an dem Klappenkörper (7) ggf. integral angeformten Lagerbüchse (25''), in die der Lagerzapfen (40) passend aufgenommen ist und eine Stirnwand (26'') besitzt, die bezüglich dem Klappenkörper (7) in Axialrichtung federnd ausgebildet ist.

22. Klappeneinrichtung nach Anspruch 21, dadurch gekennzeichnet, daß der Klappenkörper (7) zwei parallel zueinander und quer zur Achse (A) verlaufende Schlitze (65,66) und einen hierzwischen angeordneten, die Stirnwand (26'') aufweisenden schmalen Federsteg (70) aufweist.

23. Klappeneinrichtung nach Anspruch 22, dadurch gekennzeichnet, daß die Stirnwand (26'') die mit der Lagerfläche (43) der kegeligen Spitze des Lagerzapfens (40) zusammenwirkende konisch ausgebildete Gegenlagerfläche (44) aufweist.

24. Klappeneinrichtung nach Anspruch 22 oder 23, dadurch gekennzeichne, daß die Schlitze (65,66) mit Abstand von parallel zur Achse (A) verlaufende Längskanten (8'',8''') des Klappenkörpers (7) enden, und der Klappenkörper (7) beidendig der Schlitze (65,66) integral angeformte, parallel zur Achse (A) verlaufende Versteifungsprofile (68,69) besitzt, die sich vorzugsweise nur über einen begrenzten Längskantenbereich erstrecken.

25. Klappeneinrichtung nach einem der Ansprüche 22 bis 24, dadurch gekennzeichnet, daß der zweite Schlitz (66) einen sich unmittelbar an die Stirnwand (26'') anschließenden, erweiterten Bereich (67) besitzt.

26. Klappeneinrichtung nach einem der Ansprüche 22 bis 25, dadurch gekennzeichnet, daß die Schlitze (65,66) von einer den Klappenkörper (7) umrandenden Umspritzung (32) aus elastomerem Material abgedeckt werden.

## Claims

1. Valve device in a ventilation or air conditioning installation in motor vehicles, wherein, inside an air duct (3) in a housing (1) a valve (6) is arranged which is accommodated with pivotal movement between two duct walls (4, 4') in bearings (5, 5') situated at both ends of the valve (6) to swivel around the axis (A) extending therebetween, the bearings (5, 5') consisting of pin-like bearing elements (9;40;80) provided on the wall side and bush or shell-like counter-bearing elements (50;25;25', 25'';84) accommodating them, a bearing (5, 5') being spring-resiliently impinged with force in the direction of the axis (A), characterized in that on at least one bearing (5, 5') the bearing element (9,40,80) and/or counter-bearing element (50;25;25',25'';84) or a part of same is designed to resile relative to the valve (6) in the axial direction, or has a spring element (45;87) acting in the axial direction, in that the elastically springing bearing element (9,40,80) and/or counter-bearing element (50; 25, 25'25'',84) or the elastically springing part thereof, or the spring element (45;87) of the bearing (5,5') acting in axial direction, is arranged inside the air duct (3) between the two bearings (5,5') in integrated manner in the valve (6), the bearing elements (9;40;80) and the counter-bearing elements (50;25, 25',25'';84) of the bearings having cooperating bearing surfaces and counter-bearing surfaces (22,53;43,44;83,89) which, as a result of the spring force acting between the bearing elements (9;40;80) and the counter-bearing elements (50;25,25',25'';84) are held pressed one against the other but mutually rotatable.

2. Valve device according to claim 1, characterized in that only on one bearing (5') is the bearing element or the counter-bearing element (40,80;25,84) or a part thereof constructed resiliently, or has a spring element (45;87). at least the cooperating bearing surfaces and counter-bearing surfaces (22, 53) of the non-resiliently constructed bearing (5) forming a conical locating surface.

3. Valve device according to either claim 1 or claim 2, characterized in that on both bearings (5, 5') the bearing surfaces and counter-bearing surfaces (22,53;43,44;83,89) form a conical locating surface.

4. Valve device according to one of claims 1 to 3, characterized in that the non-resilient bearing (5) is formed from a journal (9) integrally cast on a member (7) of the valve (6) and a bearing hole (50) on the duct wall side, the journal (9) protruding from the valve (6) in the axial direction and passing sealingly through the bearing hole (50).

5. Valve device according to claim 4, characterized in that the counter-bearing surface (53) is formed by a conical countersinking of the bearing hole (50) on the air duct side, and the bearing surface (22) is provided on a truncated cone shaped area (21), enlarged in diameter, of the journal (9) protruding through the bearing hole (50).

6. Valve device according to either claim 4 or 5, characterized in that the bearing hole (50) is surrounded by a collar (51) formed outside the air duct (3) integrally with the duct wall (4).

7. Valve device according to one of claims 4 to 6, characterized in that an end region (12) of.the journal (9) protruding through the bearing hole (50) can be coupled solid in rotation with a valve actuation element (17).

8. Valve device according to claim 7, characterized in that the end region (12) of the journal (9) has two integrally cast-on, radially resiliently constructed securing tongues (13, 13') with restraint elements (17, 17') and drivers (16, 16') which can engage in a recess (18) of the valve actuation member (17) and can be accommodated therein positively in a secure engagement.

9. Valve device according to one of claims 1 to 8, characterized in that the resilient bearing (5') is formed by a bearing journal (80) cast on the body (7) of the valve (6) which slightly protrudes in axial direction from the valve (6) and is possibly designed taperingly, and is formed by a bearing shell (84) consisting in a waist-like throat (85) in the duct wall (4') and, positively and securely accommodated therein, a disc-shaped. possibly conical-shell-shaped , spring element (87).

10. Valve device according to claim 9, characterized in that the spring element (87) is an elastomer conical-disc shaped casting which is designed correspondingly to the inner outlino of tho throat (85) and the bearing surface (83) of the bearing journal (80) and has the counter-bearing surface (89).

11. Valve device according to claim 10, characterized in that the counter-bearing surface (89) on the casting has a friction-reducing surface coating.

12. Valve device according to one of claims 1 to 9, characterized in that the resilient bearing (5') is formed by a journal (40) integrally cast on the duct wall (4), possibly tapering, by a bearing bush (25) or a bearing shell (25') possibly integrally cast on the body (7) of the valve (6), into which the journal (40) is fittingly accommodated, and by a spring element (45) which is mounted inside or outside the bearing bush (25) or bearing shall (25') and forms the resilient counter-bearing surface (44) for the journal (40).

13. Valve device according to claim 12, characterized in that the resilient element (45) is mounted between a front wall (16) of the bush (25) and the tip of the journal (42).

14. Valve device according to either claim 12 or claim 13, characterized in that the spring element is a cylindrical rubber plug secured inside the bush on the front wall.

15. Valve device according to either claim 12 or claim 23, characterized in that thr spring element (45) is a rubber-elastic moulding which extends through a gap (30) in the bush (25) into the inside of the latter.

16. Valve device according to claim 12, characterized in that the spring element (45) is a rubber elastic moulding which is positively accommodated and secured inside a break in the valve (55) provided in the immediate extension of the bearing shell (25') and which forms a front wall (58) elastically closing the bearing shell (25') at the front.

17. Valve device according to claim 16, characterized in that the front wall (58) of the moulding has the counter-bearing surface conically designed in the extension of the bearing shell (25') which cooperates with the bearing surface (43) of the tapering point of the bearing journal (40).

18. Valve device according to either claim 16 or claim 17, characterized in that the moulding has a thin-walled region (57) provided in the break (55) of the valve which is designed corrugated concertina-like transversely to the axis (A).

19. Valve device according to any one of claims 15 to 28, characterized in that the spring element (45) is an integral constituent of a circular sprayed deposit (55) of elastomeric material surrounding the valve body (7) and forming sealing lips (33), which has cuff-like surrounding areas (36, 36') around the bearing bush (25) or bearing shall (25') on both sides of the valve body (7).

20. Valve device according to claims 15 and 19, characterized in that the gap (30) in the bush (25) extends diametrically through the bush shell (27) near the front wall (25), and the moulding is formed by a connection web (39) extending inside the bush (25) between the two cuff-like areas (36, 36').

21. Valve device according to one of claims 1 to 8, characterized in that the resilient bearing (5') is constituted by a journal (40) cast integrally on the duct wall (4), possibly tapering, and is received by a bearing shell (25'') possibly cast on integrally on the valve body (7), into which the journal (40) is accommodated fittingly, and has a front wall (26'') which is designed to be resilient in the axial direction relative to the valve body (7).

22. Valve device according to claim 21, characterized in that the valve body (7) has two slits (65, 66) which extend parallel to each other and transversely to the axis (A) and a narrow spring web (70) arranged therebetween and having the front wall (26'').

23. Valve device according to claim 22, characterized in that the front wall (26'') has the conically designed counter-bearing surface (44) which cooperates with the bearing surface (43) of the tapering tip of the bearing journal (40).

24. Valve device according to either claim 22 or claim 23, characterized in that the slits end at a distance from longitudinal edges (8'', 8''') of the valve body (7) extending parallel to the axis (A), and the valve body (7) has at both ends of the slits (65, 66) integrally cast reinforcement profiles (68, 69) extending parallel to the axis (A) which extend preferably only over a limited longitudinal side region.

25. Valve device according to one of claims 22 to 24, characterized in that the second slit (66) has a widened area (67) connected directly with the front wall (26'').

26. Valve device according to one of claims 22 to 25, characterized in that the slits (65, 66) are covered by a circular deposition of sprayed elastomer material (32) surrounding the valve body (7).

## Revendications

1. Dispositif de clapet pour un système de ventilation ou de climatisation de véhicules automobiles, comprenant un clapet (6) placé à l'intérieur d'un conduit d'air (3) dans un carter (1) et reçu entre deux parois de conduit (4, 4') dans des paliers (5, 5') situés aux deux extrémités du clapet (6), de manière qu'il puisse pivoter autour de l'axe (A) s'étendant entre ces paliers, dispositif dans lequel les paliers (5, 5') sont constitués d'éléments de palier semblables à des tourillons (9; 40; 80) prévus du côté de la paroi et d'éléments de palier antagonistes semblables à des douilles ou des coussinets (50; 25; 25', 25''; 84) qui reçoivent les éléments mentionnés en premier, et dans lequel un palier (5, 5') est sollicité élastiquement par une force en direction de l'axe (A), caractérisé en ce que, sur au moins un palier (5, 5'), l'élément de palier (9, 40, 80) et/ou l'élément de palier anatagoniste (50; 25, 25', 25''; 84) ou une partie de cet élément ou de ces éléments, est réalisé pour être élastique dans la direction axiale par rapport au clapet (6) ou possède un élément de ressort (45; 87) agissant en direction axiale, que l'élément de palier élastique (9, 40, 80) et/ou l'élément de palier antagoniste élastique (50; 25, 25'; 84) ou la partie élastique de cet élément, ou l'élément de ressort (45; 84) agissant en direction axiale du palier (5; 5'), est disposé de façon intégrée dans le clapet (6) à l'intérieur du conduit d'air (3) entre les deux paliers (5, 5'), les éléments de palier (9; 40; 80) et les éléments de palier anatagonistes (50; 25, 25', 25''; 84) des paliers (5, 5') possédant des surfaces de support et des surfaces de support antagonistes coopérantes (22, 53; 43, 44; 83, 89) qui sont pressées l'une contre l'autre par la force élastique agissant entre les éléments de palier (9; 40; 80) et les éléments de palier antagonistes (50; 25, 25', 25''; 84), mais sont maintenues de manière qu'elles puissent tourner l'une par rapport à l'autre.

2. Dispositif de clapet selon la revendication 1, caractérisé en ce que l'élément de palier ou l'élément de palier antagoniste (40, 80; 25, 84) ou une partie de cet élément est réalisé pour être élastique ou possède un élément de ressort (45; 87) sur un palier (5') seulement, au moins les surfaces de support et de support antagoniste (22, 53) coopérantes du palier non élastique (5) formant une surface d'ajustement conique.

3. Dispositif de clapet selon la revendication 1 ou 2, caractérisé en ce que les surfaces de support et de support antagoniste (22, 53; 43, 44; 83, 89) forment une surface d'ajustement conique sur les deux paliers (5, 5').

4. Dispositif de clapet selon une des revendications 1 à 3, caractérisé en ce que le palier non élastique (5) est constitué par un tourillon (9) formé d'un seul tenant sur un corps (7) du clapet (6) et par un trou de montage (50) formé du côté de la paroi du conduit, le tourillon (9) dépassant axialement du clapet (6) et traversant de façon étanche le trou de montage (50).

5. Dispositif de clapet selon la revendication 4, caractérisé en ce que la surface de support antagoniste (53) est formée par un chanfrein conique à l'entrée du trou de montage (50), chanfrein qui est situé du côté intérieur du conduit d'air, et la surface de support (22) est prévue sur une partie tronconique (21) de plus grand diamètre du tourillon (9) traversant le trou de montage (50).

6. Dispositif de clapet selon la revendication 4 ou 5, caractérisé en ce qu'un collet de palier (51), réalisé d'un seul tenant avec la paroi du conduit (4), à l'extérieur du conduit d'air (3), forme un rebord autour du trou de montage (50).

7. Dispositif de clapet selon une des revendications 4 à 6, caractérisé en ce qu'une partie terminale (12) du tourillon (9), partie qui traverse le trou de montage (50), est accouplable solidaire en rotation avec un élément de manoeuvre (17) du clapet.

8. Dispositif de clapet selon la revendication 7, caractérisé en ce que la partie terminale (12) du tourillon (9) présente deux languettes de fixation (13, 13') formées d'un seul tenant sur le tourillon et élastiques dans le sens radial, languettes qui sont pourvues d'éléments de retenue (17, 17') et d'entraîneurs (16, 16') et peuvent être encliquetées dans une réception (18) de l'élément de manoeuvre (17) du clapet, dans laquelle elles peuvent être reçues à complémentarité de formes et de manière à établir une liaison sûre.

9. Dispositif de clapet selon une des revendications 1 à 8, caractérisé en ce que le palier élastique (5') est constitué par un tourillon (80) formé sur le corps (7) du clapet (6), tourillon qui dépasse légèrement en direction axiale du clapet (6) et est éventuellement effilé coniquement, ainsi que par une cuvette de palier ou crapaudine (84) formée par un renflement extérieur (85) de la paroi du conduit (4'), délimitant intérieurement un creux, et d'un élément de ressort (87) discoïde ou éventuellement en forme de cuvette conique, qui est reçu à complémentarité de formes et avec retenue dans ce creux.

10. Dispositif de clapet selon la revendication 9, caractérisé en ce que l'élément de ressort (87) est une pièce ou une partie moulée en élastomère en forme de disque conique, qui est réalisée en conformité avec le contour intérieur du renflement (85) et de la surface de support (83) du tourillon (80) et qui présente la surface de support antagoniste (89).

11. Dispositif de clapet selon la revendication 10, caractérisé en ce que la surface de support antagoniste (89) sur la pièce moulée présente un revêtement de surface diminuant le frottement.

12. Dispositif de clapet selon une des revendications 1 à 8, caractérisé en ce que le palier élastique (5') est constitué par un tourillon (40) formé d'un seul tenant sur la paroi du conduit (4) et éventuellement effilé coniquement, par une douille (25) ou un coussinet (25') formé, éventuellement d'un seul tenant, sur le corps (7) du clapet (6) et dans lequel le tourillon (40) est reçu avec ajustement, ainsi que par un élément de ressort (45) disposé à l'intérieur ou à l'extérieur de la douille (25) ou du coussinet (25') et formant la surface de support antagoniste élastique (44) pour le tourillon (40).

13. Dispositif de clapet selon la revendication 12, caractérisé en ce que l'élément de ressort (45) est placé entre une paroi d'extrémité (26) de la douille de palier (25) et le bout (42) du tourillon.

14. Dispositif de clapet selon la revendication 12 ou 13, caractérisé en ce que l'élément de ressort est un tampon en caoutchouc cylindrique fixé à l'intérieur de la douille sur la paroi d'extrémité.

15. Dispositif de clapet selon la revendication 12 ou 13, caractérisé en ce que l'élément de ressort (45) est une pièce ou une partie moulée douée d'élasticité caoutchoutique, qui s'étend à travers une percée (30) de la douille (25) à l'intérieur de celle-ci.

16. Dispositif de clapet selon la revendication 12, caractérisé en ce que l'élément de ressort (45) est une pièce ou une partie moulée douée d'élasticité caoutchoutique, qui est reçue à complémentarité de formes et fixée à l'intérieur d'une percée (55) du clapet prévue dans le prolongement direct du coussinet (25'), pièce ou partie qui forme une paroi d'extrémité (58) fermant élastiquement le coussinet (25').

17. Dispositif de clapet selon la revendication 16, caractérisé en ce que la paroi d'extrémité (58) de la pièce ou partie moulée forme la surface de support antagoniste (44), de conformation conique dans le prolongement du coussinet (25'), qui coopère avec la surface de support (43) du bout conique du tourillon (40).

18. Dispositif de clapet selon la revendication 16 ou 17, caractérisé en ce que la pièce ou partie moulée possède une portion à faible épaisseur de paroi (57) disposée dans la percée (55) du clapet et ayant une conformation ondulée en accordéon transversalement à l'axe (A).

19. Dispositif de clapet selon une des revendications 15 à 18, caractérisé en ce que l'élément de ressort (45) fait partie intégrante d'un surmoulage (55) réalisé par injection en matériau élastomère, surmoulage qui entoure le bord du corps (7) du clapet, forme des lèvres d'étanchéité (33) et possède, des deux côtés du corps (7) du clapet, des parties ou zones (36, 36') entourant à la façon de manchons la douille (25) ou le coussinet (25').

20. Dispositif de clapet selon les revendications 15 et 19, caractérisé en ce que la percée (30) de la douille de palier (25) s'étend diamétralement à travers la paroi latérale (27) de cette douille, près de la paroi d'extrémité (26), et la partie moulée est une barrette de liaison (39) s'étendant à l'intérieur de la douille (25) entre les deux zones semblables à des manchons (36, 36').

21. Dispositif de clapet selon une des revendications 1 à 8, caractérisé en ce que le palier élastique (5') est constitué par un tourillon (40) formé d'un seul tenant sur la paroi du conduit (4) et éventuellement effilé coniquement, ainsi que par une douille (25'') formée, éventuellement d'un seul tenant, sur le corps (7) du clapet, douille dans laquelle le tourillon (40) est reçu avec ajustement et qui possède une paroi d'extrémité (26'') réalisée pour être élastique en direction axiale par rapport au corps (7) du clapet.

22. Dispositif de clapet selon la revendication 21, caractérisé en ce que le corps (7) du clapet présente deux fentes (65, 66) s'étendant parallèlement entre elles et transversalement à l'axe (A), de même qu'une étroite barrette élastique (70) située entre ces fentes et comportant la paroi d'extrémité (26'').

23. Dispositif de clapet selon la revendication 22, caractérisé en ce que la paroi d'extrémité (26'') présente la surface de support antagoniste (44), de conformation conique, coopérant avec la surface de support (43) du bout conique du tourillon (40).

24. Dispositif de clapet selon la revendication 22 ou 23, caractérisé en ce que les fentes (65, 66) se terminent à distance de bords longitudinaux (8'', 8''') du corps de clapet (7) s'étendant parallèlement à l' axe (A), et ce corps (7) possède, aux deux extrémités des fentes (65, 66), des profils raidisseurs (68, 69) formés d'un seul tenant sur le corps, orientés parallèlement à l'axe (A) et s'étendant de préférence seulement sur une partie limitée des bords longitudinaux.

25. Dispositif de clapet selon une des revendications 22 à 24, caractérisé en ce que la seconde fente (66) possède une partie élargie (67) se raccordant directement à la paroi d'extrémité (26'').

26. Dispositif de clapet selon une des revendications 22 à 25, caractérisé en ce que les fentes (65, 66) sont recouvertes par un surmoulage (32) réalisé par injection en matériau élastomère, surmoulage qui entoure le bord du corps (7) du clapet.
